(19) Europäisches Patentamt

European Patent Office

Office européen des brevets

(11) **EP 1 485 688 B1**

(12) **EUROPÄISCHE PATENTSCHRIFT**

(45) Veröffentlichungstag und Bekanntmachung des Hinweises auf die Patenterteilung:
**13.07.2005 Patentblatt 2005/28**

(51) Int Cl.[7]: **G01J 5/00**

(86) Internationale Anmeldenummer:
**PCT/DE2003/000944**

(21) Anmeldenummer: 03720232.2

(22) Anmeldetag: **18.03.2003**

(87) Internationale Veröffentlichungsnummer:
**WO 2003/079309 (25.09.2003 Gazette 2003/39)**

(54) **VERFAHREN ZUR ERFASSUNG DER KAMMERWANDTEMPERATUR IN KOKEREIANLAGEN**

METHOD FOR MEASURING THE CHAMBER WALL TEMPERATURE IN COKING PLANTS

PROCEDE DE DETECTION DE LA TEMPERATURE DES PAROIS DE CHAMBRES D'INSTALLATIONS DE COKERIE

(84) Benannte Vertragsstaaten:
**AT BE BG CH CY CZ DE DK EE ES FI FR GB GR HU IE IT LI LU MC NL PT RO SE SI SK TR**

(30) Priorität: **18.03.2002 DE 10213077**
**12.02.2003 DE 10307593**

(43) Veröffentlichungstag der Anmeldung:
**15.12.2004 Patentblatt 2004/51**

(73) Patentinhaber: **Mannesmannröhren-Werke GmbH**
**45473 Mühlheim a.d. Ruhr (DE)**

(72) Erfinder: **PESY, Willy**
**47807 KREFELD (DE)**

(74) Vertreter: **Meissner, Peter E., Dipl.-Ing. Meissner & Meissner, Patentanwaltsbüro, Hohenzollerndamm 89 14199 Berlin (DE)**

(56) Entgegenhaltungen:
**US-A- 3 810 138       US-A- 4 463 437**

- **NN: "Spherekit: Demos" , [Online] XP002253692 Gefunden im Internet: <URL:http://www.ncgia.ucsb.edu/pubs/sphere kit/demos.html> [gefunden am 2003-09-08] & NN: "Spherekit Demos" , [Online] Gefunden im Internet: <URL:http://web.archive.org/web/1997012614 1836/http://ncgia.ucsb.edu/pubs/spherekit/ demos.html> [gefunden am 2003-09-08]**

**Beschreibung**

Die Erfindung betrifft eine Verfahren zur Erfassung der Kammerwandtemperatur in Kokereianlagen gemäß dem Oberbegriff des Patentanspruches 1.

Für ein möglichst störungsfreies Betreiben einer Kokereianlage ist die Kammerwandtemperatur eine wesentliche Einflussgröße. Ist sie zu hoch, besteht die Gefahr, dass die Feuerfest-ausmauerung vorzeitig zerstört und ersetzt werden muss. Ist sie dagegen zu niedrig, läuft der Kokereiprozess nur unvollständig ab mit Auswirkungen auf die Qualität des Kokses und der Zusammensetzung des Rohgases.

Es ist deshalb ein Anliegen der Betreiber, Aussagen über die tatsächliche Kammerwandtemperatur zu erlangen. Dazu ist es bekannt, im Kopfbereich der Ausdrückmaschine auf jeder Seite mindestens zwei optische Messgeräte anzuordnen, um beim Ausdrücken des glühenden Kokses die Kammerwand entlang zweier Höhenlinien abzufahren, um wenigstens alle 50 mm Fahrweg eine Kammerwandtemperatur zu erfassen. Diese Art der Erfassung kann nur eine grobe Aussage über die Temperaturverteilung der gesamten Kammerwand ergeben.

Ein anderes Verfahren ist aus der DE 29 48 160 A1 bekannt. Bei diesem Verfahren wird mittels eines oder mehrerer Pyrometer die Kokskuchentemperatur einer oder beider Wände während des Ausdrückens ermittelt und die gemessenen Temperaturwerte als Flächenbild aufgetragen. Dieses Flächenbild kann nur dann als Einstellgröße für die Beheizung verwendet werden, wenn davon ausgegangen wird, dass die Kokskuchentemperatur den gleichen Temperaturverlauf repräsentiert wie die Ofenwand. Dies ist aber nicht gegeben, da die Kokskuchentemperatur auch von der Gleichmäßigkeit der Austrittsgeschwindigkeit des Kokskuchens und der Umgebungstemperatur abhängig ist.

Es ist daher Aufgabe der Erfindung ein Verfahren zur Erfassung der Kammerwandtemperatur in Kokereianlagen anzugeben, mit dem in möglichst einfacher Weise eine gesicherte Aussage über die Temperaturverteilung der gesamten Kammerwand gemacht werden kann.

Diese Aufgabe wird ausgehend vom Oberbegnff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung werden in einem engen Raster Vertikalschnitte durch die Höhenlinien gelegt und die abgegriffenen Temperaturwerte mittels eines mathematischen Verfahrens zur Ermittlung benachbarter Temperaturwerte herangezogen, wobei die durch jeweils zwei benachbarte Vertikalschnitte zweier Höhenlinien sich ergebenden Temperaturwerte eine Fläche aufspannen, innerhalb der weitere Temperaturpunkte ermittelt werden.

Der Vorteil des vorgeschlagenen Verfahrens ist darin zu sehen, dass der messtechnisch erforderliche Aufwand gering gehalten werden kann und trotzdem die Aussage über die Temperaturverteilung der gesamten Kammerwand gesichert ist.

Als besonders aussagekräftig hat sich die Kombination dreier erfasster Höhenlinien, die etwa dem Kopf Mittel- und Fußbereich der Kammerwandfläche entsprechen, in Verbindung mit einem Rasterabstand der Vertikalschnitte von höchstens 50 mm herausgestellt.

Es ist naheliegend, dass die flächenhafte Erfassung der Kammerwandtemperatur um so genauer wird, je großer die Anzahl der Höhenlinien und je geringer der Rasterabstand der Vertikalschnitte ist. Die erste Maßnahme erhöht den messtechnischen Aufwand ganz erheblich, da an der Ausdrückmaschine weitere optische Messgeräte installiert und verkabelt werden müssen. Die Wartung dieser Messgeräte ist aufwendig und dementsprechend teuer. Die zweite Maßnahme erhöht den Rechen- und Auswerteaufwand, ohne dass möglicherweise die Aussagegenauigkeit signifikant zunimmt.

Die angenäherte flächenhafte Erfassung der Kammerwandtemperatur kann dazu genutzt werden, flächenhaft auftretende Unter- bzw. Überschreitungen einer vorgegebenen Solltemperatur unter Berücksichtigung einer Toleranzspanne zu erfassen. Der Betreiber kann dann gezielter als bisher die Heizzüge kontrollieren lassen, um die Ursache für die Abweichung zu beseitigen.

Fasst man die Temperaturverteilung der beiden Wände aller Kammern einer Koksofenbatterie zusammen, so erhält man eine räumliche Darstellung der Temperaturverteilung für die Batterie. Daraus ergibt sich die Möglichkeit einer exakten Einstellung der Beheizung, ein optimaler Energieeinsatz und eine längere Lebensdauer der Koksofenbatterie durch eine gleichmäßigere Temperaturbelastung der Ofenwände.

In mehreren Prinzipskizzen wird das erfindungsgemäße Verfahren näher erläutert.

Es zeigen

**Figur 1** einen Längsschnitt durch eine Kammer einer Kokereianlage,

**Figur 2, 3** ein Temperatur/Kammerhöhe-Diagramm für je einen ausgewählten Vertikalschnitt,

**Figur 4** Kammerwand mit einem Bereich einer unzulässigen Temperaturerhöhung.

**Figur 5** schematisch ein Raster für das mathematische Auswerteverfahren

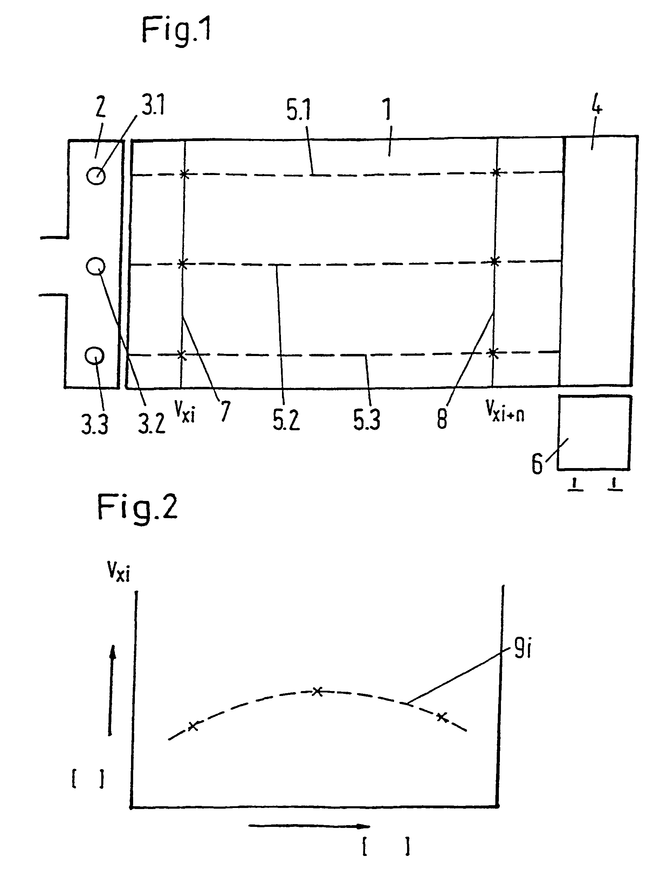

In **Figur 1** ist in einem Längsschnitt eine Kammer einer Kokereianlage dargestellt. Man schaut auf eine Wand 1 der Kammer, in der die Verkokung stattfindet. Auf der linken Seite ist der Kopfbereich einer Ausdrückmaschine 2 dargestellt, die auf beiden Seitenflächen mit je drei optischen Temperaturmessgeräten 3.1 - 3.3 versehen ist.

Beim Ausdrücken des glühenden Kokses in die Ablage 4 überfahren die drei optischen Messgeräte 3.1 - 3.3 die Kammerwand auf je einer Höhenlinie 5.1 - 5.3 (gestrichelte Linien). Von der Ablage 4 fällt der glühende Koks in den bereitgestellten Löschwagen 6.

Entlang der Höhenlinien 5.1 - 5.3 wird in Abhängigkeit der Erstreckung der Heizzüge pro Heizung ein Temperaturmittelwert erfasst, so dass sich beispielsweise bei 34 Heizzügen pro Höhenlinie 34 Temperaturmittelwerte ergeben. Alternativ kann man aber auch die den Temperaturmittelwert bildenden Einzelwerte erfassen, so dass sich beispielsweise bei 10 Einzelmesswerten pro Heizzug für 34 Heizzüge 340 Temperaturmesswerte ergeben.

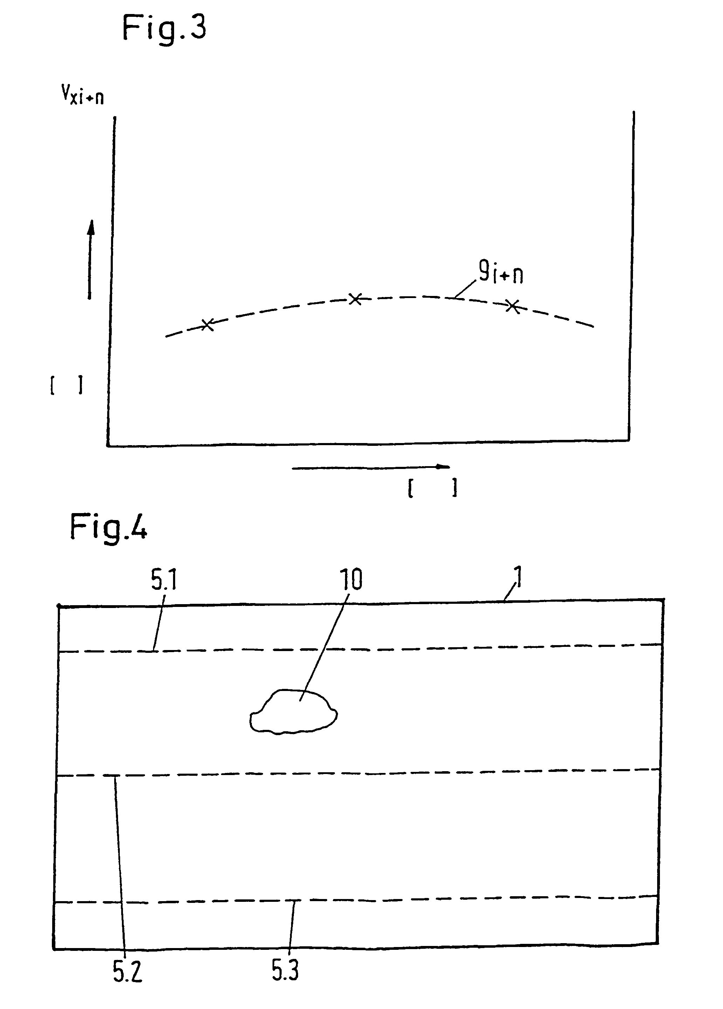

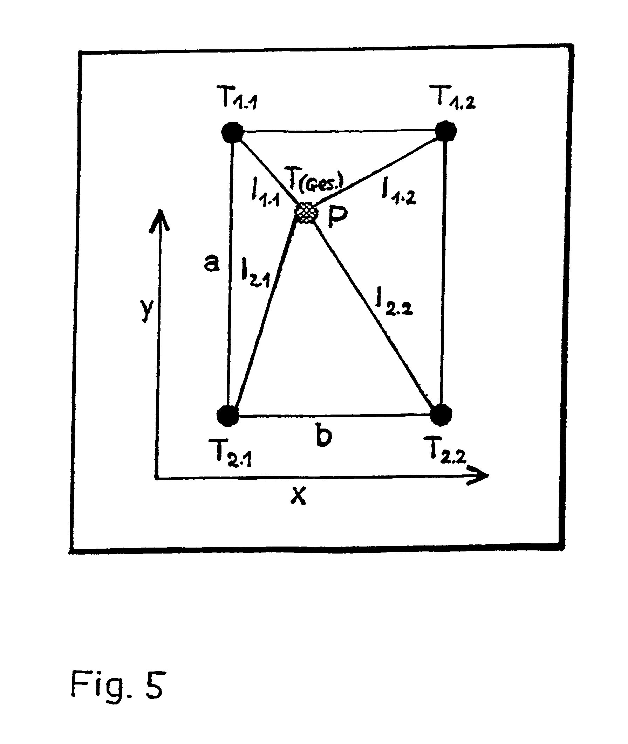

Die Erfindung ist nun dadurch gekennzeichnet, dass man gedanklich durch die drei Höhenlinien Vertikalschnitte 7, 8 legt, so dass jeder Vertikalschnitt 7, 8 drei Temperaturwerte ergibt (hier mit einem Kreuzchen markiert). Trägt man entsprechend den Darstellungen in **Figur 2** bzw. **Figur 3** diese drei Temperaturwerte über die Kammerhöhe auf, ist es möglich, mit Hilfe eines mathematischen Verfahrens die benachbarten Temperaturwerte zu ermitteln. Das angewandte mathematische Verfahren ist unter der Bezeichnung "Inverse Abstands-Gewichtungs-Methode" (Inverse Distance Weighted Method) bekannt. Bei diesem Verfahren werden durch jeweils zwei benachbarte Vertikalschnitte zweier Höhenlinien vier Temperatureckwerte festgelegt, die bei geraden Vertikalschnitten und geraden Höhenlinien eine Rechteckfläche aufspannen **(Figur 5).** Um die Temperatur an einem beliebigen Punkt innerhalb der von T1.1; T1.2; T2.1 und T2.2 aufgespannten Fläche zu berechnen, gilt folgender Zusammenhang

$$T_{Gesucht} = \frac{\sum_{i=1}^{2} \sum_{j=1}^{2} \left[ \alpha_{i,j} \cdot \frac{T_{i,j}}{l_{i,j}} + \lambda_{i,j} \right]}{\sum_{i=1}^{2} \sum_{j=1}^{2} \left[ \beta_{i,j} \cdot \frac{1}{l_{i,j}} + \gamma_{i,j} \right]} \quad \text{mit} \quad l_{i,j} = \sqrt{(x_{i,j} - b)^2 + (y_{i,j} - a)^2}$$

$\alpha_{i,j}$ :     Korrekturfaktor für die Temperaturverteilung

$\lambda_{i,j}$ :     Korrekturfaktor für das Temperaturniveau

$\beta_{i,j}$ :     Korrekturfaktor für die Gewichtung der Längen

$\gamma_{i,j}$ :     Korrekturfaktor für das Längenniveau

Mit Hilfe dieses Zusammenhanges werden in der Betrachtungsebene weitere Temperaturpunkte ermittelt. Pro Betrachtungsebene werden beispielsweise in X-Richtung 10 weitere Punkte ermittelt und in Y-Richtung ebenfalls 10. Der Grund hierfür liegt darin, dass in der Nähe eines direkt gemessenen Temperaturpunktes der Fehler sehr klein ist.

Eine Verbesserung kann über eine weitere Höhenlinie 5 erreicht werden, dies bedeutet aber ein weiteres Temperaturmessgerät 3 einschließlich Verkabelung und Auswertung, so dass hier die Grenzen schnell gesetzt sind.

In **Figur 4** ist beispielhaft dargestellt ein flächenhafter Bereich 10, dessen Einzeltemperaturen alle über einen vorgegebenen Sollwert einschließlich Toleranzen liegen. Diesen hätte man nach der alten Methode nicht entdecken können, da er zwischen zwei Höhenlinien 5 liegt. Sorgt man dafür, dass in der Auswerteprogrammierung eine solche Stelle ein Warnsignal auslöst, wird sich der Betreiber diese Stelle genauer ansehen, um dann zu entscheiden, welche Abhilfemaßnahmen zweckmäßig und wirkungsvoll sind.

**Bezugszeichenliste**

| Nr. | Bezeichnung |
|-----|-------------|
| 1 | Kammerwand |

(fortgesetzt)

| Nr. | Bezeichnung |
|---|---|
| 2 | Ausdrückmaschine |
| 3 | Temperaturmessgerät |
| 4 | Ablage |
| 5 | Höhenlinie |
| 6 | Löschwagen |
| 7 | Vertikalschnitt |
| 8 | Vertikalschnitt |
| 9 | Ausgleichspolynom |
| 10 | flächenhafter Bereich |

**Patentansprüche**

1. Verfahren zur Erfassung der Kammerwandtemperatur in Kokereianlagen, bei dem mindestens entlang zweier im Abstand voneinander liegender Höhenlinien die Temperatur mehrerer punktförmiger Bereiche jeder Kammerwand optisch ermittelt wird
   **dadurch gekennzeichnet,**
   **dass** in einem engen Raster Vertikalschnitte (7, 8) durch die Höhenlinien (5) gelegt und die an dem Schnittpunkten abgegriffenen Temperaturwerte mittels eines mathematischen Verfahrens zur Ermittlung weiterer benachbarter Temperaturwerte herangezogen werden, wobei die durch jeweils zwei benachbarte Vertikalschnitte zweier Höhenlinien sich ergebenden Temperaturwerte Temperatureckwerte ($T_{1.1}$, $T_{1.2}$, $T_{2.1}$, $T_{2.2}$) bilden, die eine Fläche aufspannen innerhalb der die weiteren Temperaturpunkte ausgehend von den Temperatureckwerten ($T_{1.1}$, $T_{1.2}$, $T_{2.1}$, $T_{2.2}$) durch das mathematische Verfahren ermittelt werden.

2. Verfahren nach Anspruch 1
   **dadurch gekennzeichnet,**
   **dass** die Temperaturerfassung entlang dreier Höhenlinien (5.1 - 5.3) erfolgt.

3. Verfahren nach Anspruch 2
   **dadurch gekennzeichnet,**
   **dass** die Höhenlinien (5.1 - 5.3) etwa dem Kopf-, dem Mittel- und dem Fußbereich der Kammerwandfläche (1) entsprechen.

4. Verfahren nach Anspruch 1 - 3
   **dadurch gekennzeichnet,**
   **dass** der Rasterabstand für die Vertikalschnitte (7, 8) höchstens 50 mm entspricht.

5. Verfahren nach den Ansprüchen 1 - 4
   **dadurch gekennzeichnet,**
   **dass** die Einzeltemperaturen der angenäherten flächenhaften Temperaturverteilung abgeglichen werden mit einer vorgegebenen Solltemperatur und bei flächenhaft auftretender Unter- bzw. Überschreitung eines Toleranzwertes ein Warnsignal erzeugt wird.

**Claims**

1. Method for detecting the chamber wall temperature in coking plants, in which the temperature of a plurality of punctiform regions of each chamber wall is optically determined at least along two contour lines which are situated at a spacing from each other,
   **characterised in that**,
   in a narrow grid, vertical sections (7, 8) are placed through the contour lines (5) and the measured-off temperature values at the intersection points are used to determine further adjacent temperature values by means of a mathematical method, the temperature values produced by respectively two adjacent vertical sections of two contour lines forming temperature corner values ($T_{1.1}$, $T_{1.2}$, $T_{2.1}$, $T_{2.2}$) which span a surface within which the further temperature points are determined by the mathematical method, starting from the temperature corner values ($T_{1.1}$, $T_{1.2}$, $T_{2.1}$, $T_{2.2}$).

**2.** Method according to claim 1,
**characterised in that**
the temperature detection is effected along three contour lines (5.1 - 5.3).

**3.** Method according to claim 2,
**characterised in that**
the contour lines (5.1 - 5.3) correspond approximately to the top, the middle and the bottom region of the chamber wall surface (1).

**4.** Method according to claim 1 - 3,
**characterised in that**
the grid spacing for the vertical sections (7, 8) corresponds to at most 50 mm.

**5.** Method according to claims 1 - 4,
**characterised in that**
the individual temperatures of the approximated surface temperature distribution are compared with a prescribed reference temperature and, when a tolerance value is fallen below or exceeded on the surface, a warning signal is produced.

**Revendications**

**1.** Procédé de détection de la température de paroi de chambre dans des cokeries, dans lequel la température de plusieurs zones ponctuelles de chaque paroi de chambre est déterminée de manière optique au moins le long de deux courbes de niveau situées à distance l'une de l'autre,
**caractérisé en ce que** des verticales d'intersection (7, 8) coupent les courbes de niveau (5) en une trame serrée et les valeurs de température prélevées aux points d'intersection sont utilisées au moyen d'un procédé mathématique pour la détermination d'autres valeurs de température voisines, les valeurs de température résultant de deux verticales d'intersection voisines coupant deux courbes de niveau formant des valeurs de température de référence ($T_{1.1}$, $T_{1.2}$, $T_{2.1}$, $T_{2.2}$), lesquelles définissent une surface à l'intérieur de laquelle les autres points de température sont déterminés par le procédé mathématique à partir des valeurs de température de référence ($T_{1.1}$, $T_{1.2}$, $T_{2.1}$, $T_{2.2}$).

**2.** Procédé selon la revendication 1,
**caractérisé en ce que** la détection de température a lieu le long de trois courbes de niveau (5.1 - 5.3).

**3.** Procédé selon la revendication 2,
**caractérisé en ce que** les courbes de niveau (5.1 - 5.3) correspondent approximativement à la zone de tête, de milieu et de pied de la surface de paroi de chambre (1).

**4.** Procédé selon les revendications 1 à 3,
**caractérisé en ce que** l'écartement de trame pour les verticales d'intersection (7, 8) est au plus égal à 50 mm.

**5.** Procédé selon les revendications 1 à 4,
**caractérisé en ce que** les différentes températures de la répartition thermique de surface approchée sont équilibrées par rapport à une température de consigne prédéterminée et **en ce qu'**un signal d'avertissement est émis en cas de franchissement vers le haut ou vers le bas d'une valeur de tolérance.

## Fig.1

## Fig.2

## Fig.3

## Fig.4

Fig. 5